(19) **Europäisches Patentamt / European Patent Office / Office européen des brevets**

(11) **EP 3 230 833 B1**

(12) **FASCICULE DE BREVET EUROPEEN**

(45) Date de publication et mention
de la délivrance du brevet:
**10.04.2019 Bulletin 2019/15**

(21) Numéro de dépôt: **15805187.0**

(22) Date de dépôt: **07.12.2015**

(51) Int Cl.:
*G06F 3/0354* (2013.01)    *G06F 3/038* (2013.01)

(86) Numéro de dépôt international:
**PCT/EP2015/078816**

(87) Numéro de publication internationale:
**WO 2016/091799 (16.06.2016 Gazette 2016/24)**

(54) **PROCÉDÉ DE DÉTECTION CONTINUE D'UN ÉTAT DE CONTACT OU DE NON CONTACT ENTRE UNE POINTE D'UN USTENSILE ET UN SUPPORT D'ÉCRITURE D'ÉPAISSEUR VARIABLE, ET SYSTÈME ASSOCIÉ**

VERFAHREN ZUR KONTINUIERLICHEN DETEKTION EINES ZUSTANDSKONTAKTES ODER NICHT-KONTAKTES ZWISCHEN EINER SPITZE EINES INSTRUMENTS UND EINEM SCHREIBMEDIUM MIT VARIABLER DICKE UND ZUGEHÖRIGES SYSTEM

METHOD FOR CONTINUOUSLY DETECTING A STATE CONTACT OR NON-CONTACT BETWEEN A TIP OF AN INSTRUMENT AND A WRITING MEDIUM HAVING A VARIABLE THICKNESS, AND RELATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2014 FR 1462107**

(43) Date de publication de la demande:
**18.10.2017 Bulletin 2017/42**

(73) Titulaire: **ISKN**
**38000 Grenoble (FR)**

(72) Inventeurs:
• **ALOUI, Rabeb**
**38600 Fontaine (FR)**
• **HAUTSON, Tristan**
**38600 Fontaine (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**FR-A1- 2 988 874**

**Description**

La présente invention porte sur un procédé de détection continue d'un état de contact ou de non contact entre une pointe d'un ustensile et un support d'écriture d'épaisseur variable, et système associé

Il est connu des procédés et systèmes de détection continue d'un état de contact ou de non contact entre une pointe d'un ustensile et un support d'écriture d'épaisseur variable.

Il est connu d'utiliser un ustensile d'écriture équipé d'un dispositif de détection de contact tel un capteur de pression, mais un tel ustensile d'écriture nécessite d'être équipé d'un dispositif électronique utilisant une source d'alimentation électrique.

Il est également connu d'utiliser une surface d'écriture sensible au toucher, telle une interface tactile, mais une telle approche ne permet pas d'utiliser des supports passifs d'épaisseur variable, tel un cahier.

Il est également connu d'utiliser un seuil fixe de contact, par exemple comme décrit dans le document FR 2988874, ce qui ne permet pas de pallier les défauts d'estimation de la position de la pointe de l'ustensile d'écriture, exige une erreur d'estimation submillimétrique, et n'est pas efficace si le support d'écriture se déforme au touché de l'ustensile.

Un but de l'invention est de pallier ces problèmes.

Il est proposé, selon un aspect de l'invention, un procédé de détection continue d'un état de contact ou de non contact entre une pointe d'un ustensile et une surface d'écriture d'un support d'écriture d'épaisseur variable disposé sur une surface d'appui d'un dispositif de localisation; ledit procédé comprenant les étapes consistant à:

- déterminer, à un instant courant, la position de la pointe de l'ustensile par rapport à la surface d'appui;
- déterminer, à l'instant courant, une distance entre la surface d'appui et la pointe, à partir de ladite position de la pointe;
- mettre à jour la valeur courante d'une distance minimale entre la surface d'appui et la surface d'écriture avec la distance entre la surface d'appui et la pointe à l'instant courant, lorsque ladite distance est inférieure à la valeur courante de la distance minimale;
- déterminer, à l'instant courant, un paramètre de mouvement de la pointe, représentatif d'un rapport entre le mouvement tangentiel à la surface d'écriture et le mouvement normal à la surface d'écriture entre l'instant courant et l'instant précédent;
- déterminer, à l'instant courant, un paramètre d'amplitude représentatif de l'amplitude du mouvement de la pointe entre l'instant courant et l'instant précédent;
- déterminer un état de contact entre la pointe et la surface d'écriture, à l'instant courant, lorsque:

  - la distance est inférieure ou égale à la somme d'une distance minimale courante et d'une tolérance, ladite tolérance étant représentative d'une incertitude sur la distance entre la surface d'écriture et la surface d'appui;
  - le paramètre de mouvement est représentatif d'un mouvement essentiellement tangentiel à la surface d'écriture, i.e. sa valeur est inférieure ou égale à un seuil de mouvement tangentiel; et
  - une norme du paramètre d'amplitude est supérieure ou égale à un seuil d'amplitude minimum;

- déterminer, sinon, un état de non contact entre la pointe et la surface d'écriture, à l'instant courant.

Ainsi, il est possible d'estimer la position de la pointe de l'ustensile d'écriture, de manière précise même si le support d'écriture se déforme au touché de l'ustensile. Ainsi, l'invention fonctionne aussi bien avec une simple feuille qu'avec un carnet.

Dans un mode de mise en oeuvre, on utilise une fenêtre temporelle glissante sur laquelle on utilise des moyennes pondérées respectives pour ladite position, et/ou ladite distance, et/ou ledit paramètre de mouvement, et/ou ledit paramètre d'amplitude; la fenêtre glissante comprenant un ensemble d'échantillons de données correspondant à un ensemble d'instants successifs dans lequel on considère un instant courant, les autres instants de l'ensemble précédant l'instant courant étant considérés comme des instants passés de la fenêtre glissante, et les autres instants de l'ensemble succédant à l'instant courant étant considérés comme des instants futurs de la fenêtre glissante courante.

En d'autres termes, sur une fenêtre glissante courante, comprenant une pluralité d'instants successifs, l'instant courant considéré n'est pas le dernier.

Ainsi on améliore la précision du procédé, ce qui permet d'avoir une meilleure visibilité sur la nature du mouvement, et ainsi de réduire les faux positifs.

Selon un mode de mise en oeuvre, le procédé comprend, en outre, une étape consistant à mettre à jour ladite tolérance lorsque deux déterminations successives d'état de contact ou non contact, déterminent un même état.

Ainsi, le procédé s'adapte mieux à l'état de la surface d'écriture sans perdre la réactivité lors de pertes rapides de contact.

Dans un mode de mise en oeuvre, lorsque deux déterminations successives d'état sont de contact, ladite tolérance est diminuée sans pouvoir être inférieure à un seuil de tolérance minimum.

Ainsi, la réduction de la tolérance permet au procédé d'être réactif aux pertes rapides de contact.

Selon un mode de mise en oeuvre, lorsque le paramètre de mouvement est représentatif d'un mouvement essentiellement tangentiel à la surface d'écriture, i.e. sa valeur est inférieure ou égale au seuil de mouvement tangentiel (il serait souhaitable de garder le même, car on définit la même condition) et que la distance est supérieure à la somme de la distance minimale courante et de la tolérance, la distance minimale courante est augmentée.

Ainsi, l'augmentation de la distance minimale permet au procédé de suivre un changement éventuel de l'épaisseur du support en fonction de la position de contact, ce qui est pratique pour le cas de supports dont la surface de contact n'est pas de hauteur régulière.

Dans un mode de mise en oeuvre, lorsque deux déterminations successives d'état sont de non contact et la valeur du paramètre de mouvement est inférieur à un seuil de mouvement maximal, ladite tolérance est augmentée sans pouvoir être supérieure à un seuil de tolérance maximum.

Selon un mode de mise en oeuvre, l'ustensile est muni d'un élément magnétique fixe et le dispositif de localisation utilisé est muni d'un réseau d'au moins N magnétomètres triaxiaux reliés entre-eux mécaniquement sans aucun degré de liberté pour conserver une position relative connue de ces magnétomètres, N étant un nombre entier au moins égal à 2.

Ainsi, il est possible d'utiliser des supports d'écriture passifs (papier, carnet, cahier...) avec un ustensile passif (un simple stylet ...) auquel est lié un aimant.

Il est également proposé, selon un autre aspect de l'invention, un système de détection continue d'un état de contact ou de non contact entre une pointe d'un ustensile et une surface d'écriture d'un support d'écriture d'épaisseur variable disposé sur une surface d'appui d'un dispositif de localisation; ledit système comprenant un calculateur apte à:

- déterminer, à un instant courant, la position de la pointe de l'ustensile par rapport à la surface d'appui;
- déterminer, à l'instant courant, une distance entre la surface d'appui et la pointe, à partir de ladite position de la pointe;
- mettre à jour la valeur courante d'une distance minimale entre la surface d'appui et la surface d'écriture avec la distance entre la surface d'appui et la pointe à l'instant courant, lorsque ladite distance est inférieure à la valeur courante de la distance minimale;
- déterminer, à l'instant courant, un paramètre de mouvement de la pointe, représentatif d'un rapport entre le mouvement tangentiel à la surface d'écriture et le mouvement normal à la surface d'écriture entre l'instant courant et l'instant précédent;
- déterminer, à l'instant courant, un paramètre d'amplitude représentatif de l'amplitude du mouvement de la pointe entre l'instant courant et l'instant précédent;
- déterminer un état de contact entre la pointe et la surface d'écriture, à l'instant courant, lorsque:

  - la distance est inférieure ou égale à la somme d'une distance minimale courante et d'une tolérance, ladite tolérance étant représentative d'une incertitude sur la distance entre la surface d'écriture et la surface d'appui;
  - le paramètre de mouvement est représentatif d'un mouvement essentiellement tangentiel à la surface d'écriture, i.e. sa valeur est inférieure ou égale à un seuil de mouvement tangentiel; et
  - une norme du paramètre d'amplitude est supérieure ou égale à un seuil d'amplitude minimum;

- déterminer, sinon, un état de non contact entre la pointe et la surface d'écriture, à l'instant courant.

L'invention sera mieux comprise à l'étude de quelques modes de réalisation décrits à titre d'exemples nullement limitatifs et illustrés par les dessins annexés sur lesquels :

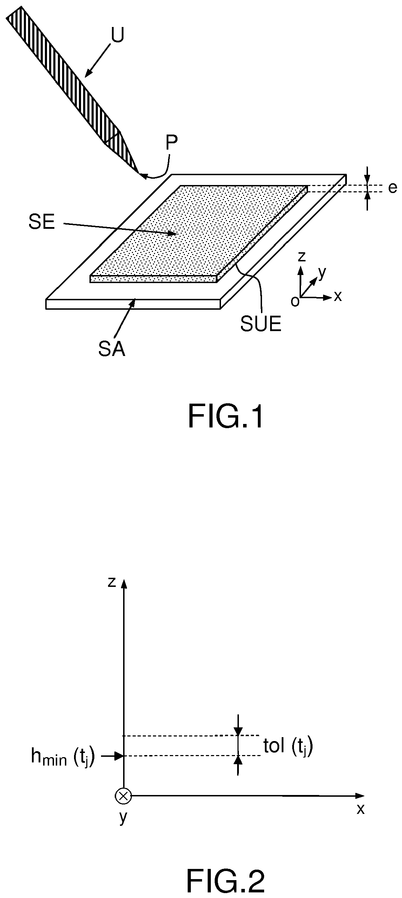

- les figures 1 à 10 illustrent schématiquement un procédé selon un aspect de l'invention.

Sur l'ensemble des figures, les éléments ayant des références identiques sont similaires.

Le procédé et le système de l'invention suppose de disposer à chaque instant $t_i$ d'une estimation de la position de la pointe P d'un ustensile U, tel un stylet ou stylo, par rapport à une référence plane ou surface d'appui SA sur laquelle est placé le support d'écriture SUE comprenant une surface d'écriture SE. Le support d'écriture SUE, par exemple un bloc-notes ou carnet, peut plus ou moins se déformer. Le but de l'invention est de permettre de décider si à un instant $t_i$ la pointe de l'ustensile est en contact avec le support d'écriture ou pas.

On définit un repère (O,X,Y,Z) lié à la surface de référence, telle que les axes X et Y sont parallèles à la surface d'écriture SE et l'axe Z est perpendiculaire à cette surface SE. La position Pos de la pointe P de l'ustensile U à l'instant $t_i$ est décrite dans ce repère:

$$Pos(t_i) = \begin{bmatrix} x(t_i) \\ y(t_i) \\ z(t_i) \end{bmatrix} = \begin{bmatrix} t(t_i) \\ z(t_i) \end{bmatrix} \qquad (1)$$

Les composantes x et y selon les axes X et Y sont appelées composantes tangentielles et sont représentées par le vecteur $t(t_i)$. La composante z selon l'axe Z est appelée composante normale. On appelle h la distance entre la pointe P et la surface d'appui SA ($h = \|z\|$).

Par exemple, l'ustensile U peut être muni d'un élément magnétique EM fixe et le dispositif de localisation DL utilisé être muni d'un réseau R d'au moins N magnétomètres triaxiaux $M_i$ reliés entre-eux mécaniquement sans aucun degré de liberté pour conserver une position relative connue de ces magnétomètres $M_i$, N étant un nombre entier au moins égal à 2. Des ustensile U et dispositif de localisation DL similaires sont par exemple décrits dans les documents FR 2988862 et FR 2988874.

Toutefois l'invention s'applique également à un système de numérisation basé sur la localisation ultrasonique dans lequel un émetteur ultrasonique est lié à l'ustensile et un système de réception ultrasonique est lié à la surface d'écriture. L'invention s'applique également à un système de localisation optique utilisant une caméra pouvant déterminer la position d'un point de l'ustensile en trois dimensions.

Dans la suite de la description, le procédé est décrit en utilisant une fenêtre glissante utilisant n valeurs successives, mais il peut être également appliqué sans fenêtre glissante, i.e. sur une seule donnée à la fois (n=1), ce qui revient à considérer une fenêtre glissante comprenant un seul échantillon de données à la fois.

Les n dernières estimations de la position de la pointe P de l'ustensile U sont placées dans une fenêtre glissante:

$$Pos(t_{i-n+1}) \quad ... \quad Pos(t_{i-1}) \quad Pos(t_i) \qquad (2)$$

L'instant de décision $t_j \in t_{i-n+1} ... t_i$ est défini comme l'instant pour lequel on effectue la décision (contact ou non contact). On appelle instants passés par rapport à l'instant $t_j$ les instants $t_k$ tel que $t_{i-n+1} \leq t_k < t_j$. On appelle instants futurs les instants $t_k$ tel que $t_j < t_k \leq t_i$.

On définit un vecteur de mouvement à l'instant $t_i$ comme étant:

$$dPos(t_i) = Pos(t_i) - Pos(t_{i-1}) \qquad (3)$$

Comme pour les positions, on forme une fenêtre glissante des mouvements aux instants successifs :
$dPos(t_{i-n+2}) ... dPos(t_i)$

Un mouvement peut être composé d'un mouvement tangentiel $dt(t_i)$ correspondant aux deux axes X et Y, et d'un mouvement normal $dz(t_i)$ :

$$dPos(t_i) = \begin{bmatrix} dx(t_i) \\ dy(t_i) \\ dz(t_i) \end{bmatrix} = \begin{bmatrix} x(t_i) - x(t_{i-1}) \\ y(t_i) - y(t_{i-1}) \\ z(t_i) - z(t_{i-1}) \end{bmatrix} = \begin{bmatrix} t(t_i) - t(t_{i-1}) \\ z(t_i) - z(t_{i-1}) \end{bmatrix} = \begin{bmatrix} dt(t_i) \\ dz(t_i) \end{bmatrix} \quad (4)$$

On appelle amplitude de mouvement à l'instant $t_i$ la valeur scalaire :

$$\|dPos(t_i)\| \qquad (5)$$

Un paramètre de mouvement à l'instant $t_i$ (noté $PM(t_i)$) permet de distinguer si le mouvement est plutôt tangentiel par rapport à la surface d'écriture ou bien plutôt normal à la surface d'écriture.

Le paramètre de mouvement ne donne pas une information utile si l'amplitude du mouvement est faible. Cela est dû au bruit sur l'estimation de la position Pos de la pointe P (et donc sur le mouvement). Il faut donc lier les tests sur le paramètre de mouvement à un test sur l'amplitude de mouvement pour avoir une certitude sur ces tests.

On peut par exemple utiliser comme indicateur le rapport du mouvement normal par la norme du mouvement :

$$PM(t_i) = \frac{dz(t_i)}{\|dpos(t_i)\|} \qquad (6)$$

La valeur de ce paramètre est comprise entre -1 et 1. La valeur 1 correspond à un mouvement entièrement normal à la surface d'écriture SE (i.e. lorsque la pointe P s'éloigne de la surface d'écriture SE). La valeur 0 correspond à un mouvement parfaitement parallèle à la surface d'écriture SE. La valeur -1 correspond à un mouvement entièrement normal à la surface d'écriture SE lorsque la pointe P s'approche de la surface d'écriture SE.

On peut utiliser comme paramètre de mouvement le rapport de la valeur absolue du mouvement normal (ou distance h) et de la norme du mouvement :

$$PM(t_i) = \frac{|dz(t_i)|}{\|dPos(t_i)\|} = \frac{dh(t_i)}{\|dPos(t_i)\|} \qquad (6)$$

Cette forme est simple à comparer à un seuil puisque le résultat est inclus entre 0 et 1. La valeur 1 correspond à un mouvement entièrement normal à la surface. La valeur 0 correspond à un mouvement parfaitement parallèle à la surface d'écriture SE (ou plus précisément la surface d'appui SA).

Il est également possible d'utiliser la valeur de la composante normale du mouvement $dz(t_i)$ ou la variation de la distance $dh(t_i)$, qui donne l'amplitude du mouvement dans la direction normale. Généralement, quand la pointe P de l'ustensile U est en contact avec la surface d'écriture SE, cette composante ne varie pas beaucoup au cours du temps. Par contre lorsque l'ustensile U n'est pas en contact avec la surface d'écriture SE, il est difficile de la maintenir à une valeur faible. Pour plus de certitude, il vaut mieux exiger également que l'amplitude $dPos(t_i)$ du mouvement dépasse un seuil $dPos_{min}$ pour déterminer la nature du mouvement.

On forme une fenêtre glissante contenant les valeurs du paramètre de mouvement $PM(t_i)$ à divers instants successifs:

$$\left[ PM\left(t_{i-(n-1)}\right) \quad \dots \quad PM(t_j) \right] \qquad (7)$$

Deux autres paramètres sont estimés à chaque réception d'une nouvelle estimation de la position $Pos(t_i)$ de la pointe P de l'ustensile U:

Le niveau minimal de la surface de contact à l'instant de décision $h_{min}(t_j)$

La tolérance $tol_h(t_j)$ sur le niveau de la surface de contact ou surface d'écriture SE à l'instant de décision (l'incertitude sur le niveau de la surface de contact).

La figure 1 représente les divers paramètres décrivant la surface d'écriture SE.

Enfin, il est possible de définir une variable booléenne CONTACT qui décrit l'état de contact entre la pointe P de l'ustensile U et la surface d'écriture SE.

La suite de la description, décrit en détail un mode de réalisation non limitatif de la présente invention.

Initialement, le niveau minimal de la surface de contact, ou, en d'autres termes, la valeur courante de la distance minimale $h_{min}(t_i)$ entre la surface d'appui SA et la surface d'écriture SE du support d'écriture SUE $h_{min}(t_i)$ est inconnu. Il est initialisé à la valeur maximale tolérable de l'épaisseur du support d'écriture, par exemple 3 cm, en considérant qu'il s'agit là de l'épaisseur maximale d'un carnet.

La tolérance est fixée à une valeur initiale, par exemple 1 mm, et la pointe P de l'ustensile U est considérée comme en état non contact. On attend ensuite d'avoir reçu n estimations de la position de la pointe P de l'ustensile U.

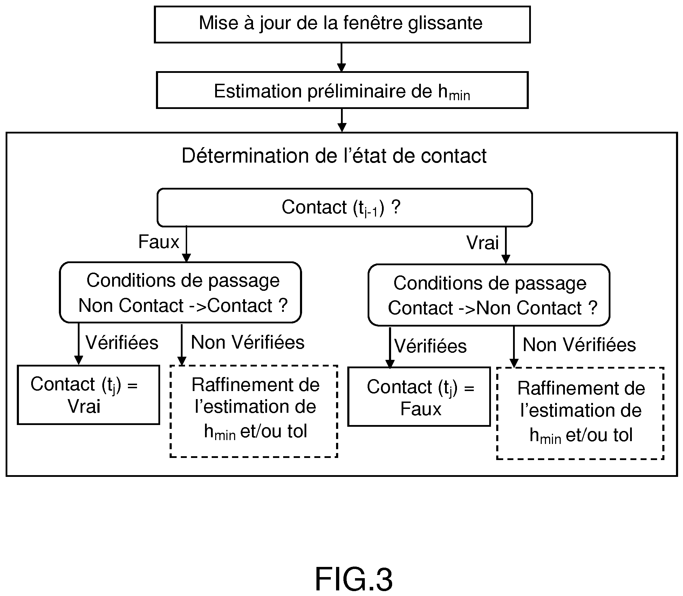

Le traitement itératif du procédé, comme illustré sur la figure 3, comprend les étapes suivantes :

- à chaque nouvelle estimation de la position de la pointe P de l'ustensile U, mettre à jour les valeurs des paramètres pris en compte dans la fenêtre glissante (Pos, h, PM, dPos, tol);
- faire une estimation préliminaire de la distance minimale $h_{min}(t_j)$ entre la surface d'appui SA et la pointe P; et
- déterminer un état de contact ou de non contact entre la pointe P de l'ustensile U, et, éventuellement raffiner l'estimation de la distance minimale $h_{min}(t_j)$ entre la surface d'appui SA et la pointe P et/ou l'estimation de la tolérance $tol(t_j)$.

Concernant la mise à jour de la fenêtre glissante, à un instant d'estimation $t_i$, on dispose des valeurs suivantes :

$$\mathbf{Pos}(t_{i-n+1}); \quad ... \quad \mathbf{Pos}(t_{i-1}); \quad \mathbf{Pos}(t_i) \qquad (8)$$

$$\left[\mathbf{dPos}(t_{i-n+2)}); \quad ... \quad \mathbf{dPos}(t_{i-1}); \; \mathbf{dPos}(t_i)\right] \qquad (9)$$

$$\left[\mathrm{PM}(t_{i-n+2)}) \quad ... \quad \mathrm{PM}(t_i)\right] \qquad (10)$$

$$h_{\min}(t_{j-1}) \qquad (11)$$

$$\mathrm{tol}_h(t_{j-1}) \qquad (12)$$

$$\mathrm{Contact}(t_{j-1}) \; (\text{vrai ou faux}) \qquad (13)$$

Le procédé de l'invention vise à estimer $h_{\min}(t_j)$, $\mathrm{tol}(t_j)$ et $\mathrm{Contact}(t_j)$, avec $t_j \in [\![t_{i-n+1} \quad ; \quad t_i]\!]$. Ces paramètres dépendent de l'état de contact (booléen valant respectivement 1 pour un état de contact et 0 pour un état de non contact) à l'instant précédent ($t_{j-1}$) ainsi que la valeur des différents paramètres calculés.

On commence par une estimation préliminaire du niveau minimal de la surface de contact, ou distance minimale $h_{\min}(t_j)$ entre la surface d'appui SA et la pointe P, à l'instant j. Cette estimation peut se calculer de plusieurs manières selon le nombre de points enregistrés ainsi que la position de l'instant de décision dans la fenêtre.

Par exemple, on peut comparer $h_{\min}(t_j)$ à la distance verticale ($h(t_j)$) de la pointe P de l'ustensile U au même instant. Si $h(t_j) < h_{\min}(t_j)$ alors $h_{\min}(t_j) = h(t_j)$.

Cette comparaison peut aussi être effectuée par rapport à la totalité des points de la fenêtre glissante, à la valeur moyenne, ou encore à la valeur médiane de la fenêtre. Elle peut aussi être effectuée par rapport aux instants futurs ou encore aux instants passés, par rapport à l'instant de la fenêtre glissante considéré comme l'instant courant.

L'utilisation d'une valeur moyenne $h_{\mathrm{Mean}}(t_j)$ sur la totalité ou bien une partie des points de la fenêtre glissante permet de réduire l'effet du bruit :

$$h_{\mathrm{Mean}}(t_j) = \frac{\sum_{k=l}^{m} h(t_k)}{m-l+1}$$

dans laquelle:

$$i - n + 1 < l < m < i$$

n représente le nombre de points de la fenêtre glissante.

i : indice du premier point de la partie utilisée pour le calcul de la moyenne (médiane ou encore la valeur minimale) des points de la fenêtre glissante

m : indice du dernier point de la partie des points de la fenêtre glissante

m-l+1 : nombre de points dans cette partie

Plus le bruit d'estimation de la position Pos de la pointe P est élevé, plus il faut de points pour limiter son effet.

Pour ne pas avoir beaucoup de retard (de détection de l'état de contact ou de non contact), il vaut mieux réduire le nombre de points dans la fenêtre glissante succédant à l'instant de décision $t_j$.

La détermination de l'état de contact ou de non contact à l'instant $t_j$ est conditionné par l'état précédent $t_{j-1}$ ainsi que tout ou partie des paramètres sauvegardés dans la fenêtre glissante.

Aussi, on définit une machine à deux états (contact/non contact). Le passage d'un état à un autre est effectué par des tests et des seuils qui sont adaptés au dispositif de localisation DL permettant d'estimer la position de la pointe P de l'ustensile U. Ces seuils peuvent aussi être optimisés en fonction d'un style d'écriture ou de dessin.

Ces tests sont divisés en deux catégories: des tests obligatoires pouvant fonctionner avec un système assez précis, et des tests optionnels permettant de combler certaines imperfections d'estimation de la position Pos de la pointe P ainsi que les déformations du support d'écriture SUE, i.e. de la surface d'écriture SE.

La tolérance $tol_h(t_j)$ sur le niveau de la surface d'écriture SE peut être soit fixe (adapté cas où le dispositif de localisation d'estimation de la position de la pointe de l'ustensile est assez précis et que le support ne se déforme pas trop) soit variable, auquel cas, son estimation sera raffinée en fonction des résultats des tests.

Les conditions de passage de l'état de non contact à l'état de contact comprennent les conditions obligatoires suivantes:

- la position verticale de la pointe P, ou, en d'autres termes la distance $h(t_j)$ entre la surface d'appui SA et la pointe P, à l'instant $t_j$ est au-dessous du niveau minimal $h_{min}(t_j)$ de la surface de contact ou surface d'écriture SE auquel est ajoutée la tolérance tol sur le niveau de la surface de contact SE.
- le paramètre de mouvement $PM(t_j)$ de la pointe P indique un mouvement parallèle à la surface d'écriture SE. En outre, il est nécessaire de coupler cette condition à une condition minimale (seuil) sur le paramètre d'amplitude de mouvement $\|dPos(t_j)\| \geq dPos_{min}$.

Ces deux conditions doivent être réalisées pour passer de l'état de non contact à l'état contact.

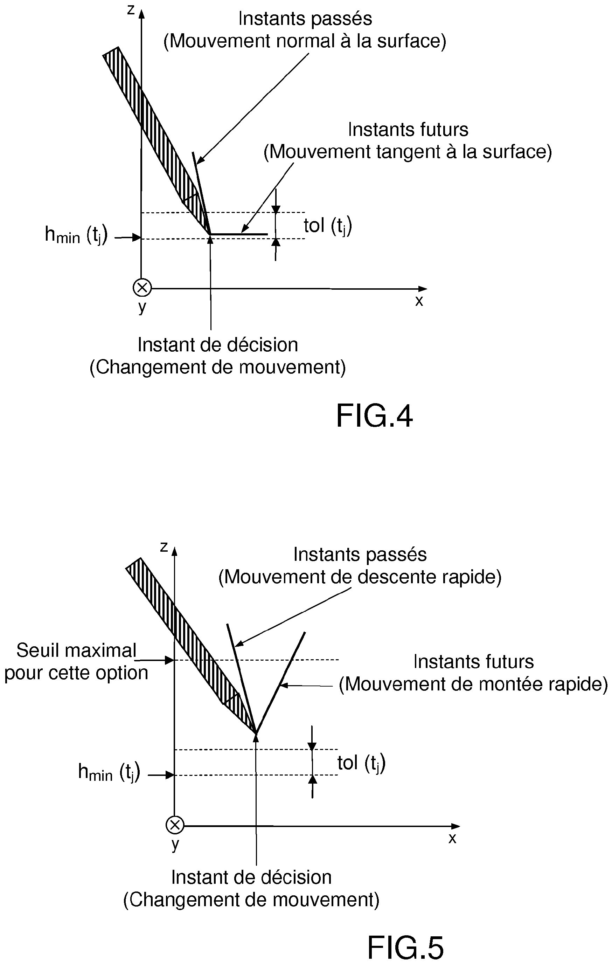

L'amplitude de mouvement $dPos(t_j)$ ainsi que le paramètre de mouvement $PM(t_j)$ peuvent être soit calculés uniquement sur l'instant de décision ($t_j$) ou bien sur plusieurs instants de la fenêtre glissante, i.e. en faisant des combinaisons sur des instants futurs et des instants passés de la fenêtre glissante (par exemple, valeur maximale, valeur minimale, valeur moyenne ou encore valeur médiane). Par exemple, cela permet de détecter le moment de passage entre mouvement vertical et mouvement horizontal comme le montre la figure 4 qui correspond généralement au moment de contact entre la pointe P et la surface d'écriture SE.

Le mouvement est essentiellement normal à la surface d'écriture SE avant le début d'écriture, ensuite, il est tangent à la surface lors de l'écriture. On peut, par exemple, calculer une moyenne pondérée de ce paramètre PM sur les instants futurs et déterminer si elle correspond à un mouvement tangent à la surface ou non.

Une condition optionnelle additionnelle peut être de réaliser un filtrage passe-bas de la position de la pointe P ou uniquement de la composante normale Z de la position, il est possible que les mouvements rapides, comme l'inscription d'un point, ne vérifient pas les conditions obligatoires. Dans ce cas, on ajoute une condition optionnelle qui permet de gérer ce problème. La figure 5 représente ce cas.

Si la pointe P de l'ustensile U effectue un mouvement de descente suivi d'un mouvement de montée, et que la position Pos de la pointe P au moment de décision est au-dessous d'un seuil maximal de distance à la surface d'appui SA prévu pour cette option, alors on passe à l'état contact pour une seule itération.

Pour détecter ceci, on peut utiliser le paramètre de mouvement à l'instant ou les instants précédents et le paramètre de mouvement à l'instant ou les instants suivants, et détecter le moment où on a une descente rapide suivie par une montée rapide.

Il est également possible d'avoir recours à des combinaisons, par exemple des combinaisons linéaires, des instants passés et des combinaisons, par exemple des combinaisons linéaires, des instants futurs pour détecter le moment de contact entre la pointe P de l'ustensile U et la surface d'écriture, par exemple, calculer la moyenne, la valeur médiane...

Concernant le raffinage de la tolérance tol sur le niveau de la surface de contact SE à l'état de non contact, si aucune des contions n'est vérifiée, on reste à l'état de non contact. Accessoirement, il est possible de raffiner la tolérance afin de combler certains problèmes tels que l'imprécision du dispositif de localisation DL de la pointe P, la flexion du papier lors de l'écriture, et l'augmentation de l'épaisseur du support d'écriture SUE (la diminution étant gérée par l'estimation préliminaire du niveau de la surface d'écriture SE).

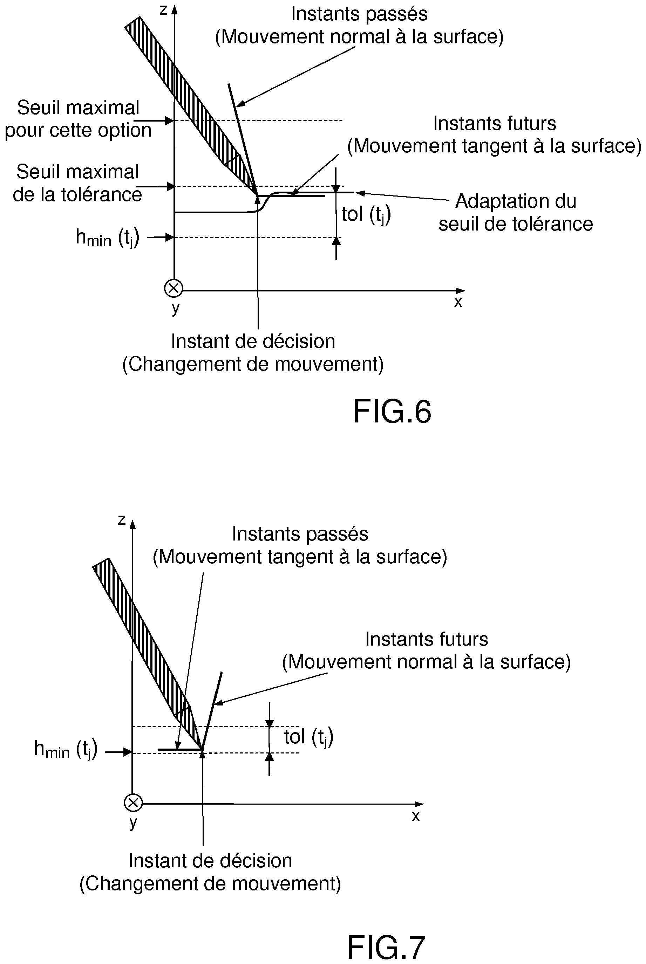

Si le paramètre de mouvement PM permet de détecter un mouvement tangentiel tel que la pointe P est au-dessous d'un seuil maximal, la tolérance est incrémentée. Cette technique permet de rapidement atteindre la nouvelle épaisseur du support d'écriture SUE et de ne pas perdre beaucoup de points à cause d'un tel changement. Le résultat peut donc être très satisfaisant mais dépend de la fréquence d'acquisition du dispositif de localisation. Cela est illustré sur la figure 6.

Il est également possible de sauvegarder les instants passés tant que le mouvement est plutôt tangentiel et dès que la tolérance atteint la nouvelle épaisseur, on peut corriger les décisions de ces instants passés en considérant qu'il y avait contact. Ceci permet de se rattraper en cas de changement importants d'épaisseur du support, et est utile lorsque la déformation du support est très importante ou bien lorsque le système n'est pas assez précis.

Les conditions de passage de l'état de contact à l'état de non contact, comprennent les conditions obligatoires suivantes:

- la position verticale de la pointe P, ou, en d'autres termes la distance $h(t_j)$ entre la surface d'appui SA et la pointe P, à l'instant $t_j$ est au-dessus du niveau minimal $h_{min}(t_j)$ de la surface d'écriture SE auquel est ajoutée la tolérance tol sur le niveau de la surface de contact SE.
- le paramètre de mouvement $PM(t_j)$ de la pointe P indique un mouvement ayant une pente par rapport à la surface d'écriture SE supérieure à un seuil. Selon le paramètre de mouvement utilisé, il est nécessaire de coupler cette condition à une condition minimale (seuil) sur le paramètre d'amplitude de mouvement $\|dPos(t_j)\| \geq dPos_{min}$.

La figure 7 représente un cas simple de fin de contact entre la pointe P de l'ustensile U et la surface d'écriture SE.

Ces conditions obligatoires ne permettent pas de pallier des problèmes liés à la flexion du support d'écriture SUE ainsi que des défauts d'estimation de la position de la pointe P. Aussi, il est possible de combiner des conditions supplémentaires optionnelles permettent de déterminer si la pointe P s'est bien déconnecté de la surface d'écriture SE ou bien il s'agit juste d'une flexion de la surface d'écriture SE, d'un changement d'épaisseur dû au fait que la surface d'écriture SE n'est pas parfaitement parallèle au plan xy de la surface d'appui SA, ou encore un problème lié à la précision du dispositif d'acquisition DL.

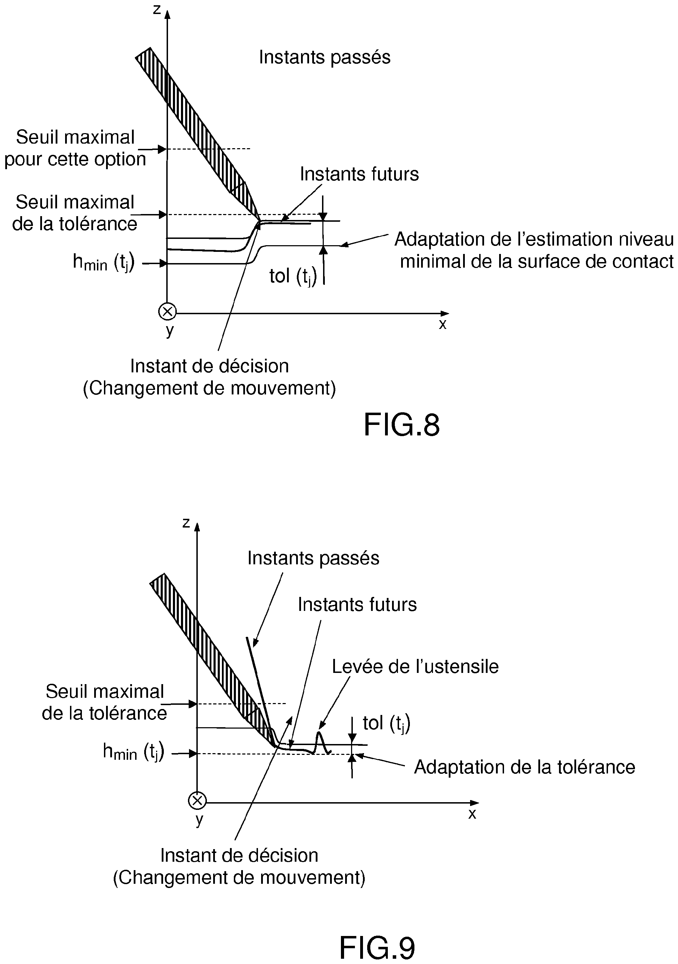

Un tel cas est illustré sur la figure 8.

Ces conditions optionnelles reposent sur la paramètre de mouvement PM (ou bien une combinaison des valeurs du paramètre de mouvement aux instants passés ou/et futurs). En effet, la signature de levé de la pointe P en cours d'une écriture ou d'un dessin et celle d'un changement d'épaisseur ne sont différentes, et il suffit d'appliquer un double seuillage :

- un seuillage plus tolérant au niveau de la condition obligatoire utilisant le paramètre de mouvement PM, et
- un seuillage plus strict au niveau des conditions optionnelles qui permet de passer en état de non contact uniquement si un mouvement de pente supérieure a été détecté. Dans le cas inverse, on effectue des raffinages de l'estimation des deux paramètres suivants:

  - le niveau minimal de la surface de contact à l'instant de décision $h_{min}(t_j)$,
  - la tolérance sur le niveau de la surface d'écriture à l'instant de décision $tol_h(t_j)$ (l'incertitude sur le niveau de la surface de d'écriture)

On entend par seuillage le fait de comparer le paramètre de mouvement PM avec un seuil. Si ce dernier ne dépasse pas le seuil, on effectue un raffinage de l'estimation des paramètres. Ce seuil permet de dire que probablement, l'épaisseur du support a changé, et qu'il y a toujours contact.

Tout comme pour les autres conditions liées aux indicateurs de mouvement PM, il est préférable de le coupler à un test de l'amplitude du mouvement pour obtenir de meilleurs résultats.

Concernant le raffinage de l'estimation distance minimale $h_{min}(t_j)$ entre la surface d'appui SA et la surface d'écriture SE à l'état de contact.

Si aucune des conditions optionnelles n'est vérifiée, on reste à l'état de contact. Accessoirement, il est possible de raffiner l'estimation du niveau minimal $h_{min}(t_j)$ de la surface d'écriture SE. Ceci permet de s'adapter aux changements d'épaisseur lors de l'écriture, par exemple s'il y a de petites bosses sur la surface d'écriture SE du support SUE ou si le support SUE n'est pas parfaitement parallèle au plan xy.

Si la position Pos de la pointe P de l'ustensile U, i.e. la distance $h(t_j)$ dépasse le niveau minimal $h_{min}(t_j)$ de la surface d'écriture auquel est ajouté la tolérance $tol(t_j)$ sur le niveau de la surface d'écriture SE, on augmente la valeur du niveau minimal $h_{min}(t_j)$ de la surface d'écriture SE. Ceci est valable jusqu'à un certain seuil afin de ne pas favoriser les faux positifs ou fausses détections de contact. Ainsi, selon les paramètres de seuillage ainsi que les valeurs des incréments, la solution est plus ou moins tolérante aux défauts au niveau de la surface d'écriture SE.

La figure 9 illustre un raffinage de la tolérance sur le niveau de la surface d'écriture à l'état de contact.

Quand les conditions obligatoires ne sont pas vérifiées, il est clair que la pointe P est bien en contact avec la surface d'écriture SE. Dans ce cas, on peut éventuellement profiter pour réduire la tolérance $tol(t_j)$ sur le niveau de la surface d'écriture SE. La tolérance $tol(t_j)$ ne peut pas descendre au-dessous d'un seuil minimal afin d'éviter des problèmes de trous dans les lignes tracées à cause des imperfections.

Cette opération, permet de détecter rapidement des pertes de contact, puisque quand cet intervalle atteint sa valeur minimale, une levée de la pointe P le fait sortir rapidement de la zone de tolérance et permet de valider les conditions obligatoires proposées ci-dessus.

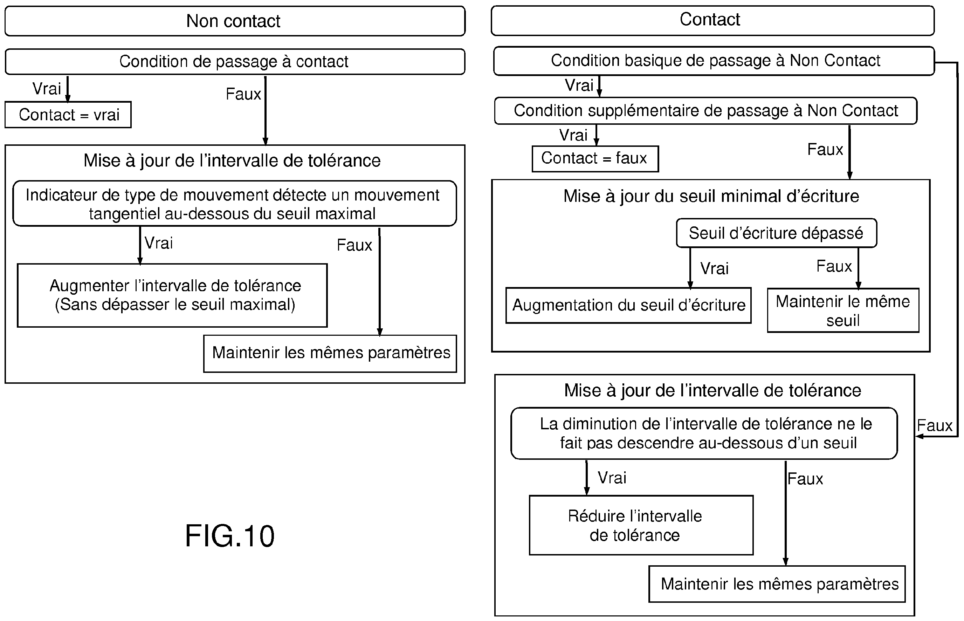

La figure 10 illustre un exemple de la machine à états (contact ou non contact) avec la mise à jour optionnelle de la tolérance $tol(t_j)$.

Les étapes du procédé décrit ci-dessus peuvent être effectuées par un ou plusieurs processeurs programmables exécutant un programme informatique pour exécuter les fonctions de l'invention en opérant sur des données d'entrée et générant des données de sortie.

Un programme d'ordinateur peut être écrit dans n'importe quelle forme de langage de programmation, y compris les langages compilés ou interprétés, et le programme d'ordinateur peut être déployé dans n'importe quelle forme, y compris en tant que programme autonome ou comme un sous-programme, élément ou autre unité appropriée pour une utilisation dans un environnement informatique. Un programme d'ordinateur peut être déployée pour être exécuté sur un ordinateur ou sur plusieurs ordinateurs à un seul site ou répartis sur plusieurs sites et reliées entre elles par un réseau de communication.

**Revendications**

1. Procédé de détection continue d'un état de contact ou de non contact entre une pointe (P) d'un ustensile (U) et une surface d'écriture (SE) d'un support d'écriture (SUE) d'épaisseur variable disposé sur une surface d'appui (SA) d'un dispositif de localisation (DL); ledit procédé comprenant les étapes consistant à:

   - déterminer, à un instant courant ($t_i$), la position ($Pos(t_i)$) de la pointe (P) de l'ustensile (E) par rapport à la surface d'appui (SA);
   - déterminer, à l'instant courant ($t_i$), une distance ($h(t_i)$) entre la surface d'appui (SA) et la pointe (P), à partir de ladite position ($Pos(t_i)$) de la pointe (P);
   - mettre à jour la valeur courante d'une distance minimale ($hmin(ti)$) entre la surface d'appui (SA) et la surface d'écriture (SE) avec la distance ($h(t_i)$) entre la surface d'appui (SA) et la pointe (P) à l'instant courant ($t_i$), lorsque ladite distance ($h(t_i)$) est inférieure à la valeur courante de la distance minimale ($h_{min}(t_i)$);
   - déterminer, à l'instant courant ($t_i$), un paramètre de mouvement ($PM(t_i)$) de la pointe (P), représentatif d'un rapport entre le mouvement tangentiel à la surface d'écriture (SE) et le mouvement normal à la surface d'écriture (SE) entre l'instant courant ($t_i$) et l'instant précédent ($t_{i-1}$);

   **caractérisé en ce qu'**il comprend les étapes consistant à :

   - déterminer, à l'instant courant ($t_i$), un paramètre d'amplitude ($dPos(t_i)$) représentatif de l'amplitude du mouvement de la pointe (P) entre l'instant courant ($t_i$) et l'instant précédent ($t_{i-1}$);
   - déterminer un état de contact entre la pointe (P) et la surface d'écriture (SE), à l'instant courant ($t_i$), lorsque:

     - la distance ($h(t_i)$) est inférieure ou égale à la somme d'une distance minimale courante ($h_{min}$) et d'une tolérance ($tol(t_i)$), ladite tolérance étant représentative d'une incertitude sur la distance ($h(t_i)$) entre la surface d'écriture (SE) et la surface d'appui (SA);
     - le paramètre de mouvement ($PM(t_i)$) est représentatif d'un mouvement essentiellement tangentiel à la surface d'écriture (SE), i.e. sa valeur est inférieure ou égale à un seuil de mouvement tangentiel (SMT); et
     - une norme du paramètre d'amplitude ($dPos(t_i)$) est supérieure ou égale à un seuil d'amplitude minimum ($dPOS_{min}$),

   - déterminer, sinon, un état de non contact entre la pointe (P) et la surface d'écriture (SE), à l'instant courant ($t_i$).

2. Procédé selon la revendication 1, dans lequel, on utilise une fenêtre temporelle glissante sur laquelle on utilise des moyennes pondérées respectives pour ladite position ($Pos(t_j)$), et/ou ladite distance ($h(t_j)$), et/ou ledit paramètre de mouvement ($PM(tj_i)$), et/ou ledit paramètre d'amplitude ($dPos(t_j)$); la fenêtre glissante comprenant un ensemble d'échantillons de données correspondant à un ensemble d'instants successifs dans lequel on considère un instant courant, les autres instants de l'ensemble précédant l'instant courant étant considérés comme des instants passés de la fenêtre glissante, et les autres instants de l'ensemble succédant à l'instant courant étant considérés comme des instants futurs de la fenêtre glissante courante.

3. Procédé selon la revendication 1 ou 2, comprenant, en outre, une étape consistant à mettre à jour ladite tolérance ($tol(t_i)$) lorsque deux déterminations successives d'état de contact ou non contact, déterminent un même état.

4. Procédé selon la revendication 3, dans lequel, lorsque deux déterminations successives d'état sont de contact, ladite tolérance ($tol(t_i)$) est diminuée sans pouvoir être inférieure à un seuil de tolérance minimum ($tol_{min}$).

5. Procédé selon la revendication 4, dans lequel, lorsque le paramètre de mouvement ($PM(t_i)$) est représentatif d'un mouvement essentiellement tangentiel à la surface d'écriture (SE), i.e. sa valeur est inférieure ou égale au seuil de mouvement tangentiel (SMT) et que la distance ($h(t_i)$) est supérieure à la somme de la distance minimale courante

($h_{min}(t_i)$) et de la tolérance ($tol(t_i)$), la distance minimale courante ($h_{min}(t_i)$) est augmentée.

6. Procédé selon la revendication 3, dans lequel, lorsque deux déterminations successives d'état sont de non contact et la valeur du paramètre de mouvement est inférieur à un seuil de mouvement maximal (SMM), ladite tolérance ($tol(t_i)$) est augmentée sans pouvoir être supérieure à un seuil de tolérance maximum ($tol_{max}$).

7. Procédé selon l'une des revendications précédentes, dans lequel l'ustensile (U) est muni d'un élément magnétique (EM) fixe et le dispositif de localisation (DL) utilisé est muni d'un réseau (R) d'au moins N magnétomètres triaxiaux ($M_i$) reliés entre-eux mécaniquement sans aucun degré de liberté pour conserver une position relative connue de ces magnétomètres ($M_i$), N étant un nombre entier au moins égal à 2.

8. Système de détection continue d'un état de contact ou de non contact entre une pointe (P) d'un ustensile (U) et une surface d'écriture (SE) d'un support d'écriture (SUE) d'épaisseur variable disposé sur une surface d'appui (SA) d'un dispositif de localisation (DL); ledit système comprenant un calculateur adapté à :

   - déterminer, à un instant courant ($t_i$), la position ($Pos(t_i)$) de la pointe (P) de l'ustensile (E) par rapport à la surface d'appui (SA);
   - déterminer, à l'instant courant ($t_i$), une distance ($h(t_i)$) entre la surface d'appui (SA) et la pointe (P), à partir de ladite position ($Pos(t_i)$) de la pointe (P);
   - mettre à jour la valeur courante d'une distance minimale ($h_{min}(t_i)$) entre la surface d'appui (SA) et la surface d'écriture (SE) avec la distance ($h(t_i)$) entre la surface d'appui (SA) et la pointe (P) à l'instant courant ($t_i$), lorsque ladite distance ($h(t_i)$) est inférieure à la valeur courante de la distance minimale ($h_{min}(t_i)$);

   **caractérisé en ce que** le calculateur est adapté à:

   - déterminer, à l'instant courant ($t_i$), un paramètre de mouvement ($PM(t_i)$) de la pointe (P), représentatif d'un rapport entre le mouvement tangentiel à la surface d'écriture (SE) et le mouvement normal à la surface d'écriture (SE) entre l'instant courant ($t_i$) et l'instant précédent ($t_{i-1}$);
   - déterminer, à l'instant courant ($t_i$), un paramètre d'amplitude ($dPos(t_i)$) représentatif de l'amplitude du mouvement de la pointe (P) entre l'instant courant ($t_i$) et l'instant précédent ($t_{i-1}$);
   - déterminer un état de contact entre la pointe (P) et la surface d'écriture (SE), à l'instant courant ($t_i$), lorsque:

      - la distance ($h(t_i)$) est inférieure ou égale à la somme d'une distance minimale courante ($h_{min}(t_i)$) et d'une tolérance ($tol(t_i)$), ladite tolérance étant représentative d'une incertitude sur la distance ($h(t_i)$) entre la surface d'écriture (SE) et la surface d'appui (SA);
      - le paramètre de mouvement ($PM(t_i)$) est représentatif d'un mouvement essentiellement tangentiel à la surface d'écriture (SE), i.e. sa valeur est inférieure ou égale à un seuil de mouvement tangentiel (SMT); et
      - une norme du paramètre d'amplitude ($dPos(t_i)$) est supérieure ou égale à un seuil d'amplitude minimum ($dPOS_{min}$);

   - déterminer, sinon, un état de non contact entre la pointe (P) et la surface d'écriture (SE), à l'instant courant ($t_i$).

**Patentansprüche**

1. Verfahren zur kontinuierlichen Detektion eines Kontaktzustandes bzw. Nichtkontaktzustandes zwischen einer Spitze (P) eines Utensils (U) und einer Schreibfläche (SE) eines Schriftträgers (SUE) variabler Dicke, welcher auf einer Auflagefläche (SA) einer Lokalisierungsvorrichtung (DL) angeordnet ist; wobei das Verfahren folgende Schritte beinhaltet:

   - Bestimmen, in einem momentanen Zeitpunkt ($t_i$), der Position ($Pos(t_i)$) der Spitze (P) des Utensils (E) in Bezug auf die Auflagefläche (SA);
   - Bestimmen, im momentanen Zeitpunkt ($t_i$), eines Abstandes ($h(t_i)$) zwischen der Auflagefläche (SA) und der Spitze (P), anhand der Position ($Pos(t_i)$) der Spitze (P);
   - Aktualisieren des augenblicklichen Wertes eines Mindestabstandes ($h_{min}(t_i)$) zwischen der Auflagefläche (SA) und der Schreibfläche (SE) mit dem Abstand ($h(t_i)$) zwischen der Auflagefläche (SA) und der Spitze (P) zum momentanen Zeitpunkt (t;), wenn der Abstand ($h(t_i)$) den augenblicklichen Wert des Mindestabstandes ($h_{min}(t_i)$) unterschreitet;

- Bestimmen, im momentanen Zeitpunkt ($t_i$), eines Bewegungsparameters ($PM(t_i)$) der Spitze (P), welcher ein Verhältnis zwischen der tangentialen Bewegung an der Schreibfläche (SE) und der normalen Bewegung an der Schreibfläche (SE) zwischen dem momentanen Zeitpunkt ($t_i$) und dem vorherigen Zeitpunkt ($t_{i-1}$) darstellt;

**dadurch gekennzeichnet, dass** es folgende Schritte beinhaltet:

- Bestimmen, im momentanen Zeitpunkt ($t_i$), eines Amplitudenparameters ($dPos(t_i)$), welcher die Amplitude der Bewegung der Spitze (P) zwischen dem momentanen Zeitpunkt ($t_i$) und dem vorherigen Zeitpunkt ($t_{i-1}$) darstellt;
- Bestimmen eines Kontaktzustandes zwischen der Spitze (P) und der Schreibfläche (SE), im momentanen Zeitpunkt ($t_i$), wenn:

- der Abstand ($h(t_i)$) kleiner als die oder gleich der Summe eines momentanen Mindestabstandes ($h_{min}$) und einer Toleranz ($tol(t_i)$) ist, wobei die Toleranz eine Ungewissheit bezüglich des Abstandes ($h(t_i)$) zwischen der Schreibfläche (SE) und der Auflagefläche (SA) darstellt;
- der Bewegungsparameter ($PM(t_i)$) eine im Wesentlichen zur Schreibfläche (SE) tangentiale Bewegung darstellt, das heißt, dass sein Wert kleiner als ein oder gleich einem Grenzwert der tangentialen Bewegung (SMT) ist; und
- eine Norm des Amplitudenparameters ($dPos(t_i)$) größer als ein oder gleich einem Mindestamplitudengrenzwert ($dPos_{min}$) ist;

- ansonsten, Bestimmen eines Nichtkontaktzustandes zwischen der Spitze (P) und der Schreibfläche (SE) im momentanen Zeitpunkt ($t_i$).

**2.** Verfahren nach Anspruch 1, bei welchem man ein gleitendes Zeitfenster verwendet, auf welches jeweilige gewichtete Mittelwerte für die Position ($Pos(t_i)$) verwendet werden, und/oder für die Distanz ($h(t_i)$), und/oder für den Bewegungsparameter ($PM(t_{ji})$), und/oder für den Amplitudenparameter ($dPos(t_i)$); wobei das gleitende Fenster eine Gruppe von Datenstichproben beinhaltet, welche einer Gruppe von aufeinander folgenden Zeitpunkten entspricht, in welcher man einen momentanen Zeitpunkt betrachtet, wobei die anderen Zeitpunkte der Gruppe, welche dem momentanen Zeitpunkt vorausgehen, als vergangene Zeitpunkte des gleitenden Fensters betrachtet werden, und die Zeitpunkte der Gruppe, welche auf den momentanen Zeitpunkt folgen, als zukünftige Zeitpunkte des momentanen gleitenden Fensters betrachtet werden.

**3.** Verfahren nach Anspruch 1 oder 2, zudem beinhaltend einen Schritt des Aktualisierens der Toleranz ($tol(t_i)$), wenn zwei aufeinander folgende Bestimmungen des Kontakt- oder Nichtkontaktzustandes einen selben Zustand bestimmen.

**4.** Verfahren nach Anspruch 3, bei welchem, wenn zwei aufeinander folgende Zustandsbestimmungen Kontakt ergeben, die Toleranz ($tol(t_i)$) verringert wird, wobei sie einen Mindesttoleranzgrenzwert ($tol_{min}$) nicht zu unterschreiten hat.

**5.** Verfahren nach Anspruch 4, bei welchem, wenn der Bewegungsparameter ($PM(t_i)$) eine im Wesentlichen tangentiale Bewegung an der Schreibfläche (SE) darstellt, das heißt, wenn sein Wert kleiner als der oder gleich dem Grenzwert der tangentialen Bewegung (SMT) ist und der Abstand ($h(t_i)$) größer ist als die Summe des momentanen Mindestabstandes ($h_{min}(t_i)$) und der Toleranz ($tol(t_i)$), der momentane Mindestabstand ($h_{min}(t_i)$) erhöht wird.

**6.** Verfahren nach Anspruch 3, bei welchem, wenn zwei aufeinander folgende Zustandsbestimmungen Nichtkontakt ergeben und der Wert des Bewegungsparameters einen Bewegungs-Höchstgrenzwert (SMM) unterschreitet, die Toleranz ($tol(t_i)$) erhöht wird, wobei sie einen Toleranzhöchstwert ($tol_{max}$) nicht zu überschreiten hat.

**7.** Verfahren nach einem der vorhergehenden Ansprüche, bei welchem das Utensil (U) mit einem festen magnetischen Element (EM) versehen ist und die verwendete Lokalisierungsvorrichtung (DL) mit einem Netzwerk (R) von mindestens N triaxialen Magnetometern ($M_i$) versehen ist, welche mechanisch miteinander ohne irgendeinen Freiheitsgrad verbunden sind, um eine relative, bekannte Position dieser Magnetometer ($M_i$) beizubehalten, wobei N eine Ganzzahl von mindestens gleich 2 ist.

**8.** System zur kontinuierlichen Detektion eines Kontaktzustandes bzw. Nichtkontaktzustandes zwischen einer Spitze (P) eines Utensils (U) und einer Schreibfläche (SE) eines Schriftträgers (SUE) variabler Dicke, welcher auf einer Auflagefläche (SA) einer Lokalisierungsvorrichtung (DL) angeordnet ist; wobei das System einen Rechner beinhaltet, der geeignet ist zum:

- Bestimmen, in einem momentanen Zeitpunkt ($t_i$), der Position ($Pos(t_i)$) der Spitze (P) des Utensils (E) in Bezug auf die Auflagefläche (SA);
- Bestimmen, im momentanen Zeitpunkt ($t_i$), eines Abstandes ($h(t_i)$) zwischen der Auflagefläche (SA) und der Spitze (P), anhand der Position ($Pos(t_i)$) der Spitze (P);
- Aktualisieren des augenblicklichen Wertes eines Mindestabstandes ($h_{min}(t_i)$) zwischen der Auflagefläche (SA) und der Schreibfläche (SE) mit dem Abstand ($h(t_i)$) zwischen der Auflagefläche (SA) und der Spitze (P) zum momentanen Zeitpunkt ($t_i$), wenn der Abstand ($h(t_i)$) den augenblicklichen Wert des Mindestabstandes ($h_{min}(t_i)$) unterschreitet;

**dadurch gekennzeichnet, dass** der Rechner geeignet ist zum:

- Bestimmen, im momentanen Zeitpunkt ($t_i$), eines Bewegungsparameters ($PM(t_i)$) der Spitze (P), welcher ein Verhältnis zwischen der tangentialen Bewegung an der Schreibfläche (SE) und der normalen Bewegung an der Schreibfläche (SE) zwischen dem momentanen Zeitpunkt ($t_i$) und dem vorherigen Zeitpunkt ($t_{i-1}$) darstellt;
- Bestimmen, im momentanen Zeitpunkt ($t_i$), eines Amplitudenparameters ($dPos(t_i)$), welcher die Amplitude der Bewegung der Spitze (P) zwischen dem momentanen Zeitpunkt ($t_i$) und dem vorherigen Zeitpunkt ($t_{i-1}$) darstellt;
- Bestimmen eines Kontaktzustandes zwischen der Spitze (P) und der Schreibfläche (SE), im momentanen Zeitpunkt ($t_i$), wenn:

  - der Abstand ($h(t_i)$) kleiner als die oder gleich der Summe eines momentanen Mindestabstandes ($h_{min}(t_i)$) und einer Toleranz ($tol(t_i)$) ist, wobei die Toleranz eine Ungewissheit bezüglich des Abstandes ($h(t_i)$) zwischen der Schreibfläche (SE) und der Auflagefläche (SA) darstellt;
  - der Bewegungsparameter ($PM(t_i)$) eine im Wesentlichen zur Schreibfläche (SE) tangentiale Bewegung darstellt, das heißt, dass sein Wert kleiner als ein oder gleich einem Grenzwert der tangentialen Bewegung (SMT) ist; und
  - eine Norm des Amplitudenparameters ($dPos(t_i)$) größer als ein oder gleich einem Mindestamplitudengrenzwert ($dPos_{min}$) ist;

- ansonsten, Bestimmen eines Nichtkontaktzustandes zwischen der Spitze (P) und der Schreibfläche (SE) im momentanen Zeitpunkt ($t_i$).

## Claims

1. A method for continuously detecting a state of contact or non-contact between a tip (P) of an instrument (U) and a writing surface (SE) of a writing medium (SUE) of variable thickness positioned on a bearing surface (SA) of a tracking device (DL); said method comprising the steps consisting in:

   - determining, at a current instant in time ($t_i$), the position ($Pos(t_i)$) of the tip (P) of the instrument (E) with respect to the bearing surface (SA);
   - determining, at the current instant in time ($t_i$), a distance ($h(t_i)$) between the bearing surface (SA) and the tip (P), on the basis of said position ($Pos(t_i)$) of the tip (P);
   - updating the current value of a minimum distance ($h_{min}(ti)$) between the bearing surface (SA) and the writing surface (SE) with the distance ($h(t_i)$) between the bearing surface (SA) and the tip (P) at the current instant in time ($t_i$), when said distance ($h(t_i)$) is shorter than the current value of the minimum distance ($h_{min}(t_i)$);
   - determining, at the current instant in time ($t_i$), a movement parameter ($PM(t_i)$) of the tip (P), representative of a ratio of the movement tangential to the writing surface (SE) to the movement normal to the writing surface (SE) between the current instant in time ($t_i$) and the preceding instant in time ($t_{i-1}$);

   **characterized in that** it comprises the steps consisting in:

   - determining, at the current instant in time ($t_i$), an amplitude parameter ($dPos(t_i)$) representative of the amplitude of the movement of the tip (P) between the current instant in time ($t_i$) and the preceding instant in time ($t_{i-1}$);
   - determining a state of contact between the tip (P) and the writing surface (SE), at the current instant in time ($t_i$), when:

- the distance ($h(t_i)$) is shorter than or equal to the sum of a minimum current distance ($h_{min}$) and a tolerance ($tol(t_i)$), said tolerance being representative of an uncertainty regarding the distance ($h(t_i)$) between the writing surface (SE) and the bearing surface (SA);
- the movement parameter ($PM(t_i)$) is representative of a movement that is essentially tangential to the writing surface (SE), i.e. its value is lower than or equal to a tangential movement threshold (SMT); and
- a norm of the amplitude parameter ($dPos(t_i)$) is higher than or equal to a minimum amplitude threshold ($dPos_{min}$);

- otherwise determining a state of non-contact between the tip (P) and the writing surface (SE), at the current instant in time ($t_i$).

2. The method according to claim 1, in which a moving time window is used in which respective weighted means are used for said position ($Pos(t_j)$), and/or said distance ($h(t_j)$), and/or said movement parameter ($PM(tj_i)$), and/or said amplitude parameter ($dPos(t_j)$); the moving window comprising a set of data samples corresponding to a set of successive instants in time in which a current instant in time is considered, the other instants in time of the set preceding the current instant in time being considered to be past instants in time of the moving window, and the other instants in time of the set succeeding the current instant in time being considered to be future instants in time of the current moving window.

3. The method according to claim 1 or 2, additionally comprising a step consisting in updating said tolerance ($tol(t_i)$) when two successive operations of determining a state of contact or non-contact determine one and the same state.

4. The method according to claim 3, in which, when two successive operations of determining a state determine a state of contact, said tolerance ($tol(t_i)$) is decreased without being able to be below a minimum tolerance threshold ($tol_{min}$).

5. The method according to claim 4, in which, when the movement parameter ($PM(t_i)$) is representative of a movement that is essentially tangential to the writing surface (SE), i.e. its value is lower than or equal to the tangential movement threshold (SMT), and when the distance ($h(t_i)$) is longer than the sum of the current minimum distance ($h_{min}(t_i)$) and the tolerance ($tol(t_i)$), the current minimum distance ($h_{min}(t_i)$) is increased.

6. The method according to claim 3, in which, when two successive operations of determining a state determine a state of non-contact and the value of the movement parameter is lower than a maximum movement threshold (SMM), said tolerance ($tol(t_i)$) is increased without being able to be above a maximum tolerance threshold ($tol_{max}$).

7. The method according to one of the preceding claims, in which the instrument (U) is provided with a fixed magnetic element (EM) and the tracking device (DL) used is provided with an array (R) of at least N triaxial magnetometers ($M_i$) which are mechanically connected to one another with no degree of freedom in order to hold a known relative position of these magnetometers ($M_i$), N being an integer at least equal to 2.

8. A system for continuously detecting a state of contact or non-contact between a tip (P) of an instrument (U) and a writing surface (SE) of a writing medium (SUE) of variable thickness positioned on a bearing surface (SA) of a tracking device (DL); said system comprising a computer capable of:

- determining, at a current instant in time ($t_i$), the position ($Pos(t_i)$) of the tip (P) of the instrument (E) with respect to the bearing surface (SA);
- determining, at the current instant in time ($t_i$), a 0distance ($h(t_i)$) between the bearing surface (SA) and the tip (P), on the basis of said position ($Pos(t_i)$) of the tip (P);
- updating the current value of a minimum distance ($h_{min}(t_i)$) between the bearing surface (SA) and the writing surface (SE) with the distance ($h(t_i)$) between the bearing surface (SA) and the tip (P) at the current instant in time ($t_i$), when said distance ($h(t_i)$) is shorter than the current value of the minimum distance ($h_{min}(t_i)$);

**characterized in that** the computer is adapted to:

- determine, at the current instant in time ($t_i$), a movement parameter ($PM(t_i)$) of the tip (P), representative of a ratio of the movement tangential to the writing surface (SE) to the movement normal to the writing surface (SE) between the current instant in time ($t_i$) and the preceding instant in time ($t_{i-1}$);
- determine, at the current instant in time ($t_i$), an amplitude parameter ($dPos(t_i)$) representative of the amplitude of the movement of the tip (P) between the current instant in time ($t_i$) and the preceding instant in time ($t_{i-1}$);
- determine a state of contact between the tip (P) and the writing surface (SE), at the current instant in time ($t_i$), when:

- the distance ($h(t_i)$) is shorter than or equal to the sum of a minimum current distance ($h_{min}(t_i)$) and a tolerance ($tol(t_i)$), said tolerance being representative of an uncertainty regarding the distance ($h(t_i)$) between the writing surface (SE) and the bearing surface (SA);
- the movement parameter ($PM(t_i)$) is representative of a movement that is essentially tangential to the writing surface (SE), i.e. its value is lower than or equal to a tangential movement threshold (SMT); and
- a norm of the amplitude parameter ($dPos(t_i)$) is higher than or equal to a minimum amplitude threshold ($dPos_{min}$);

- otherwise determine a state of non-contact between the tip (P) and the writing surface (SE), at the current instant in time ($t_i$).

FIG.1

FIG.2

Mise à jour de la fenêtre glissante

Estimation préliminaire de $h_{min}$

**Détermination de l'état de contact**

Contact $(t_{j-1})$ ?

Faux | Vrai

Conditions de passage
Non Contact ->Contact ?

Conditions de passage
Contact ->Non Contact ?

Vérifiées | Non Vérifiées

Vérifiées | Non Vérifiées

Contact $(t_j)$ =
Vrai

Raffinement de
l'estimation de
$h_{min}$ et/ou tol

Contact $(t_j)$ =
Faux

Raffinement de
l'estimation de
$h_{min}$ et/ou tol

# FIG.3

Instants passés
(Mouvement normal à la surface)

Instants futurs
(Mouvement tangent à la surface)

$tol\ (t_j)$

$h_{min}\ (t_j)$

z

y

x

Instant de décision
(Changement de mouvement)

## FIG.4

Instants passés
(Mouvement de descente rapide)

Seuil maximal
pour cette option

Instants futurs
(Mouvement de montée rapide)

$tol\ (t_j)$

$h_{min}\ (t_j)$

z

y

x

Instant de décision
(Changement de mouvement)

## FIG.5

Instants passés
(Mouvement normal à la surface)

Seuil maximal
pour cette option

Instants futurs
(Mouvement tangent à la surface)

Seuil maximal
de la tolérance

$tol\ (t_j)$

Adaptation du
seuil de tolérance

$h_{min}\ (t_j)$

Instant de décision
(Changement de mouvement)

FIG.6

Instants passés
(Mouvement tangent à la surface)

Instants futurs
(Mouvement normal à la surface)

$tol\ (t_j)$

$h_{min}\ (t_j)$

Instant de décision
(Changement de mouvement)

FIG.7

z

Instants passés

Seuil maximal
pour cette option

Seuil maximal
de la tolérance

Instants futurs

Adaptation de l'estimation niveau
minimal de la surface de contact

$h_{min}$ ($t_j$)

tol ($t_j$)

⊗
y

x

Instant de décision
(Changement de mouvement)

FIG.8

z

Instants passés

Instants futurs

Levée de l'ustensile

Seuil maximal
de la tolérance

tol ($t_j$)

$h_{min}$ ($t_j$)

Adaptation de la tolérance

⊗
y

x

Instant de décision
(Changement de mouvement)

FIG.9

FIG.10

Non contact

Condition de passage à contact

Vrai → Contact = vrai

Faux

Mise à jour de l'intervalle de tolérance

Indicateur de type de mouvement détecte un mouvement tangentiel au-dessous du seuil maximal

Vrai

Faux

Augmenter l'intervalle de tolérance (Sans dépasser le seuil maximal)

Maintenir les mêmes paramètres

Contact

Condition basique de passage à Non Contact

Vrai

Condition supplémentaire de passage à Non Contact

Vrai → Contact = faux

Faux

Mise à jour du seuil minimal d'écriture

Seuil d'écriture dépassé

Vrai

Faux

Augmentation du seuil d'écriture

Maintenir le même seuil

Faux

Mise à jour de l'intervalle de tolérance

La diminution de l'intervalle de tolérance ne le fait pas descendre au-dessous d'un seuil

Vrai

Faux

Réduire l'intervalle de tolérance

Maintenir les mêmes paramètres

EP 3 230 833 B1

**EP 3 230 833 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2988874
- FR 2988862